# EUROPEAN PATENT SPECIFICATION

(11) **EP 1 105 930 B1**
(45) Date of publication and mention of the grant of the patent: **12.03.2003**
(21) Application number: 99934890.7
(22) Date of filing: 20.07.1999
(51) Int. Cl.: H01M 8/02, H01M 10/02, H01M 2/18, C25B 13/00, B01D 65/00, B01D 63/08, H01M 8/10, B23K 26/14, B23K 26/00

(54) **LASER CUTTING AND JOINING A FLUORINATED POLYMER MEMBRANE TO A POLYMER FRAME**
LASERSCHNEIDEN UND -VERBINDEN EINER MEMBRAN AUS FLUORIERTEM POLYMER ZU EINEM POLYMERRAHMEN
DECOUPE ET ASSEMBLAGE AU LASER D'UNE MEMBRANE POLYMERE FLUOREE AVEC UN CADRE POLYMERE

(30) Priority: 28.07.1998 GB 9816422
(43) Date of publication of application: 13.06.2001
(73) Proprietor: Regenesys Technologies Limited, Swindon, Wiltshire SN5 6PB (GB)
(72) Inventor: WILLIAMS, Paul Edward, Lincolnshire DN36 4ST (GB); MITCHELL, Thomas A., Digital Paradigm, Beaconsfield, Buckinghamshire HP9 2UU (GB); CLARK, Duncan, Guy, Hermitage, Berkshire RG18 9SU (GB)
(74) Representative: Allard, Susan Joyce
(86) International application number: GB9902335
(87) International publication number: WO00007254

(56) References cited:
- EP-A- 0 061 352
- EP-A- 0 454 377
- WO-A-96/29133
- DE-A- 3 621 030
- DE-A- 4 331 262
- DE-A- 4 428 938
- DE-U- 9 215 287
- DE-U- 29 518 138
- US-A- 3 560 291
- US-A- 4 847 462
- US-A- 4 942 284
- US-A- 5 645 665
- US-A- 5 772 817
- PATENT ABSTRACTS OF JAPAN vol. 014, no. 305 (M-0992), 29 June 1990 (1990-06-29) & JP 02 099293 A (SHINKO KOGYO CO LTD), 11 April 1990 (1990-04-11)
- PATENT ABSTRACTS OF JAPAN vol. 014, no. 305 (M-0992), 29 June 1990 (1990-06-29) & JP 02 099292 A (SHINKO KOGYO CO LTD), 11 April 1990 (1990-04-11)
- PATENT ABSTRACTS OF JAPAN vol. 018, no. 396 (M-1644), 25 July 1994 (1994-07-25) & JP 06 114943 A (MITSUBISHI HEAVY IND LTD), 26 April 1994 (1994-04-26) -& DATABASE WPI Derwent Publications Ltd., London, GB; AN 94-173240 XP002094742

## Description

The present invention relates to a method for cutting a fluorinated polymer membrane and simultaneously joining it to a polyolefin polymeric supporting frame. Such a method may be useful in processes for the manufacture of filters, heat exchangers and electrochemical devices. In the latter case, the supporting frame may further comprise an electrode attached thereto so that the resultant frame/electrode/membrane combination forms a sub-assembly which may then be stacked together with other identical sub-assemblies to form an array of electrochemical cells, each cell thus comprising two bipolar electrodes with a membrane positioned therebetween so as to define separate anolyte-containing and catholyte-containing chambers within each cell. Such assemblies are well known to those skilled in the art and they may be used as fuel cells, electrolysers and secondary batteries.

The incorporation of a polymeric membrane onto a supporting frame must satisfy a number of requirements. Firstly, the membrane must be accurately cut to the correct shape so that it fits the shape of the supporting frame. Secondly, the membrane must be accurately positioned on the supporting frame and its position must be verified as being correct prior to its attachment to the supporting frame. This second requirement becomes especially difficult to achieve as the size of the membrane and frame increases. The membranes are often very thin making them difficult to handle. Preferably, the first and second requirements are satisfied simultaneously by cutting the membrane in situ. Thirdly, the membrane must be attached to the supporting frame with sufficient strength to allow handling of the complete sub-assembly, for example, during stacking to form an array of electrochemical cells.

More particularly, the present invention relates to a method for the attachment of a fluorinated polymer ion-exchange membrane onto a polymeric supporting frame. The supporting frame is preferably made of a single polyolefin polymer. This creates particular problems with regard to the requirements outlined above. With regard to the third requirement, the physical and chemical characteristics of fluorinated polymer ion-exchange membranes are very different from those of hydrocarbon polymers thus making it difficult to attach the two together. Fluorinated polymer ion-exchange membranes are not thermoplastic polymers, in contrast to simple hydrocarbon polymers. They are also hydrophilic, whereas hydrocarbon polymers are hydrophobic. These types of membranes can also be sensitive to humidity which places additional constraints on the cutting and aligning requirements of the method, i.e. these requirements must be satisfied quickly with minimum handling of the membrane. Another problem arises when the sub-assembly is to comprise a fluorinated polymer ion-exchange membrane. The chemical and physical properties of these membranes allow chemical species to wick through their thickness to the edges where they may leak out into unwanted areas of the sub-assembly causing both a loss of electrolyte and resultant contamination of the surroundings of the cells. Thus the edges of the membrane should preferably be de-functionalised in some way so as to prevent this wicking effect.

Known methods for cutting the membrane to the required shape include the use of a cutting die formed into the required shape, or the use of cutting knives of various types. However, especially as size increases, these methods are often not suitable for simultaneous aligning of the cut membrane on the frame, i.e. in situ cutting. Accordingly they require further handling of the membrane in order to position it prior to attachment to the frame. Furthermore, they involve physical contact between cutting edges and the membrane which may result in misalignment of, or damage to, the membrane.

Known methods for monitoring the correct alignment of the cut membrane on the supporting frame include the use of a laser triangulation system, however this is a costly and cumbersome technique. As mentioned above it would be preferable to use a method which allows cutting of the membrane in situ. This would obviate the need for the extra steps of aligning the membrane on the frame and then checking that the alignment is correct.

A number of methods are known for attaching a fluorinated polymer membrane onto a polymeric frame. Plastic rivets may be used to create a permanent mechanical attachment to the frame. However, this method suffers from the disadvantages that it involves the extra step of punching holes in the membrane and it also results in local attachment only. Glues such as those based on silane compounds may also be used. However, the differing chemical properties of the fluorinated polymer membranes and frame polymers to which the present invention is particularly directed mean that selection of a glue which is compatible with both materials is very difficult. Furthermore, when the method of the present invention is directed toward the manufacture of sub-assemblies for forming electrochemical cells, it is preferable that the glue selected be chemically stable in the aggressive chemical environments commonly found in such electrochemical cells. Welding of the two polymers by melting them in the vicinity of the desired point of attachment is also known but is again unsuitable for the fluorinated polymer ion-exchange membrane and frame polymers to which the present invention is particularly directed because of their different thermal responses.

The wicking problem associated with the use of polymeric ion-exchange membranes may be addressed by the application of fluorinated greases to the edges of the membrane, however, this is a messy and unreliable solution.

It would be advantageous to achieve a method for the attachment of a fluorinated polymer membrane onto a polyolefin polymeric supporting frame which addresses all the requirements outlined above simultaneously.

Accordingly, the present invention provides a method for cutting a fluorinated polymer membrane and simultaneously joining it to a polyolefin polymer frame, the method comprising the steps of;
(i) contacting a fluorinated polymer membrane with a polyolefin polymer frame at the point where a cut and join is desired, and
(ii) directing at least one laser beam onto the point of contact between the membrane and the frame so as to cut the membrane and effect a join to the frame.

The present method allows cutting of the membrane to take place in situ, thus obviating the need for subsequent alignment of the cut membrane on the frame prior to joining. Furthermore, the use of a laser to cut the membrane is surprisingly found to simultaneously effect a join between the edge of the membrane and the frame. The join is found to be of sufficient strength and durability to allow subsequent handling of the membrane/frame sub-assembly.

Examples of fluorinated polymers, membranes of which may be cut and simultaneously joined to a polymer using this method, include polytetrafluoroethylene, polyhexafluoropropylene, tetrafluoroethylene-hexafluoropropylene copolymer, tetrafluoroethylene-propylene copolymer, tetrafluoroethylene-ethylene copolymer, hexafluoropropylene-propylene copolymer hexafluoropropylene-ethylene copolymer, polyvinylidene fluoride, vinylidene fluoride tetrafluoroethylene copolymer, vinylidene fluoride hexafluoropropylene copolymer, polyvinyl fluoride, tetrafluoroethylene-perfluoroalkyl vinyl ether copolymer, polyvinylidene-hexafluoropropylene copolymer, chlorotrifluoroethylene-ethylene copolymer, chlorotrifluoroethylene-propylene copolymer, or perfluoroalkoxy copolymer.

In a preferred embodiment of the present invention the fluorinated polymer membrane is a fluorinated polymer ion-exchange membrane and even more preferably the fluorinated polymer membrane is a fluorinated polymer cation-exchange membrane. Fluorinated polymer ion-exchange membranes may be formed from any of the fluorinated polymers described above with suitably functionalised monomer units grafted thereon. Suitably functionalised monomer units are well known to those skilled in the art and their structures are variable, however they essentially comprise an unsaturated functional group such as a vinyl group and an ion-exchange group such as a sulfonate or carboxylate group. Preferably the membrane is a hydrolysed copolymer of tetrafluoroethylene and a perfluoro-vinyl ether monomer comprising a cation-exchange group. Examples of preferred cation exchange membranes include copolymers of tetrafluoroethylene and a sulfonated or carboxylated perfluoro-vinyl ether such as those sold under the trade names of Nafion™ (Du Pont), Flemion™ (Asahi Glass)and Aciplex™ (Asahi Chemical).

Preferably, the thickness of the membrane is in the range of from 25µm to 300µm, more preferably from 30µm to 200µm, even more preferably from 50µm to 150µm.

It is possible that the membrane to be attached to the frame may also comprise an electrode attached thereto. Such membrane/electrode assemblies are well known in the art and all references to a membrane in this specification are intended to include such assemblies.

It will be appreciated that the polyolefin polymeric frame may be formed from a wide range of polymers or copolymers. Suitable polymers include those selected from polyethylene, polypropylene, polystyrene and copolymer blends of two or more of polyethylene, polypropylene and polystyrene, and many others. The selection of a hydrogenated polymer frame material is particularly advantageous. This is because pyrolysis of perfluorinated polymers carries with it the possibility of the formation of perfluorisobutene (PFIB) which is highly toxic. Co-pyrolysis with hydrogenated material is found to produce little or no PFIB. It is believed that this is due to the rapid addition of hydrogen radicals to fluorocarbon radical intermediates formed by fluorocarbon degradation, thus preventing recombination of fluorocarbon radicals to yield PFIB.

When the fluorinated polymer membrane is an ion exchange membrane the present method not only cuts the membrane and simultaneously joins it to the frame but surprisingly is also found to effect de-functionalisation of the cut edge of the membrane. The term de-functionalisation is intended to mean that the nature of the ion exchange membrane is altered in some way so that it no longer exhibits the same characteristics. In particular, it means that chemical species are no longer able to wick through the thickness of the membrane. The de-functionalisation of the membrane can be confirmed by staining the membrane with methylene blue which is a cationic dye. The de-functionalised region is not stained by the dye whilst the unaffected region is stained a deep blue colour. Thus, the problem of wicking associated with the use of such membranes is also addressed by the method of the present invention.

It will be understood that the laser source may be selected from a number of different types of laser and that the laser beam may be either pulsed or continuous. Preferably however the laser used is a pulsed CO₂ laser because the wavelength of light generated by this laser is particularly suitable for cutting the preferred polymer membranes mentioned above.

It will also be appreciated that the power of the laser beam to be used and the cutting speed achievable are interrelated and also dependent upon other parameters, in particular, upon the chemical structure and the thickness of the membrane. However, for the purposes of cutting the preferred polymer membranes mentioned above which are of a thickness in the range of from 25µm to 300µm the power of the laser beam is preferably in the range of from 10W to 150W and the cutting speed is preferably in the range of from 10mm/s to 1000mm/s, more preferably from 20mm/s to 500mm/s, even more preferably from 50mm/s to 200mm/s and most preferably from 100mm/s to 200mm/s.

The focus of the laser beam may also be varied, depending upon the other set-up parameters, so as to provide a broader or narrower width of irradiation of the membrane along the line of the cut/join. Preferably the width of the beam as it impinges on the membrane is in the range of from 50µm to 450µm, more preferably from 250µm to 400µm. Depending on the identity of the materials being used it is sometimes found that for a given beam power, a narrower, i.e. more focussed, beam will provide a faster cutting speed but a weaker join whilst a wider, i.e. more diffuse, beam will provide a stronger join but at a slower cutting speed. A wider beam also aids the physical separation of the functional membrane from the scrap membrane. A narrow beam allows a faster cutting speed but ease of physical separation of the functional membrane from the scrap membrane is sacrificed. The present invention is not necessarily limited to the use of a single laser beam and it will be appreciated by those skilled in the art that other beam arrangements such as a dual beam or concentric multiple beams may also be employed. In particular the dual beam method may comprise one type of beam for providing a fast cut together with another type of beam for providing a stronger join.

The cutting process as performed by the method of the present invention often generates debris which, if not controlled, could contaminate the membrane and/or frame surfaces. Accordingly, in a preferred embodiment, the method of the present invention involves use of a shielding means which is situated adjacent to the point of contact of the laser beam with the membrane and which moves in synchrony with the laser beam as it travels along the cutting line. The shielding means thus prevents debris from contaminating areas around the cutting line.

In order for the method described above to effect a join between the fluorinated polymer membrane and the polymer frame it is essential that there be contact between the membrane and the frame at the point of cutting. The contact between the membrane and the frame may be achieved by pressure means which urges the membrane into contact with the frame at the point of cutting. Suitable pressure means may comprise a plate of substantially the same perimeter size and shape as the membrane. The plate can be pressed against the membrane to ensure contact between the membrane and frame at the point of cutting. Such a plate may also be advantageously employed in combination with other types of pressure means because it provides the additional benefit of shielding the major central portion of the membrane from debris generated by the cutting of the membrane. Suitable pressure means may alternatively comprise a roller which impinges on the membrane at a position adjacent to the laser beam, or one or more air jets which apply positive gas pressure on the membrane at a position adjacent to the laser beam, or means for providing a vacuum between the membrane and the frame at or adjacent to the point where the laser beam impinges on the membrane.

In a particularly preferred embodiment, suitable pressure means may be provided by applying positive air pressure, such as an air jet, to a point adjacent to the point where the laser beam impinges on the membrane so as to bring the membrane and substrate polymer into physical contact. Preferably, the laser beam and the positive gas pressure are directed at an angle of from 110 to 120 degrees to the plane of the membrane, pointing in a direction away from the centre of the membrane. The use of positive gas pressure not only provides suitable pressure means to bring the membrane and substrate polymer into physical contact. The positive gas pressure also aids the lifting of the waste membrane whilst minimising the removal effects upon the functional piece of membrane. It also helps to remove fumes produced by the process from the vicinity of the membrane and frame.

The present invention also encompasses within its scope apparatus for performing the method of the present invention, said apparatus comprising a beam delivery system which comprises means for generating and directing one or more laser beams onto the membrane and means for generating and directing positive gas pressure to a point at or adjacent to the point where said one or more laser beams impinge on the membrane.

The lasering operation may produce large volumes of fumes and therefore, in a preferred embodiment, the apparatus also comprises a cowl which encompasses the laser beam delivery area and an extraction device for conveying fumes away from the point of cutting and joining. Said cowl is preferably shaped such that the eccentric profile allows capture of the positive air pressure's 'bounced' trajectory.

In a preferred embodiment the means for generating and directing one or more laser beams and the means for generating and directing positive gas pressure are constructed so as to provide a laser beam and a gas jet which are substantially parallel to one another.

When the cutting and joining method follows a path which is not linear, the orientation of the beam delivery system must change relative to the membrane during the cutting and joining process. Therefore, when present, the orientation of the cowl must also change to maintain a uniform void between the cowl and the membrane so as not to drastically alter the dynamics of the fume transfer. Thus, in a preferred embodiment, the extraction device and the beam delivery system are mounted on a central boss, (through which the fumes may be removed) said boss being housed within a bearing on which the main body of the cowl may be mounted. The rotating portion of the cowl is preferably counterbalanced so as to allow the cowl to remain flush relative to the membrane regardless of the boss position.

The present invention also includes within its scope a sub-assembly comprising a polyolefin polymer frame and a fluorinated polymer membrane which has been cut and attached thereto by the method described above and also a stack of one or more such sub-assemblies arranged so as to form an array of electrochemical cells for use as a fuel cell, electrolyser or secondary battery.

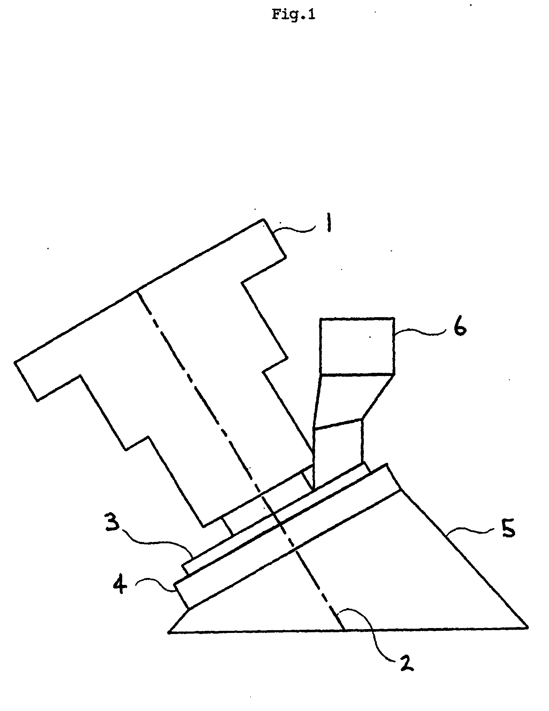

The present invention will be further described with reference to Fig 1 which represents apparatus for performing the method of the present invention.

Referring to Fig 1, the apparatus comprises a beam delivery system (1) which in turn comprises means for generating and directing one or more laser beams and means for generating and directing positive gas pressure. The broken line (2) indicates the direction of the laser beam and gas jet generated by the beam delivery system. The beam delivery system is mounted on a central boss (3) which is housed within a bearing (4). A cowl (5) is attached to the bearing (4). Also mounted on the central boss (3) is a connection (6) to an extraction device which draws fumes from within the cowl (5) and removes them to an air purification system (not shown).

The present invention will be further described with reference to the following examples:

### Example 1

Laser cutting and joining of membranes to a polyethylene substrate was carried out on the following membrane materials:
Flemion SH80™ (80µm thick, dried unconstrained)
Flemion SH80™ (80µm thick, dried constrained)
Nafion 115™ (125µm thick)

The laser used was a Coherent Diamond 64 pulsed CO₂ industrial laser (power range 10-150 watts, optimum focal distance 5mm), mounted on a gantry motion system. The following parameters were used for cutting.

| | |
|---|---|
| Pulse On-Time | 25µs |
| Maximum Pulse Power | 10% |
| Minimum Pulse Power | 5% |
| Laser-Membrane Dist. | 5mm |
| Cutting Speed | 50mm/s |

Each membrane was laid over a flat polyethylene substrate and cut in a straight line in directions both parallel to and orthogonal to the material axis. The results are summarised in the table below:

| Material | Cut direction | Clean Cut? | Bonded? |
|---|---|---|---|
| Flemion | Parallel | Yes | Yes |
| SH80™-constrained | Orthogonal | Yes | Yes |
| Flemion | Parallel | No | Partially |
| SH80™-unconstrained | Orthogonal | Yes | Yes |
| Nafion 115™ | Parallel | Yes | Yes |
| | Orthogonal | Yes | Yes |

The membranes were also cut in curved lines with identical results.

### Example 2

A further test using the method of example 1 was carried out on Flemion SH80™ material using the following laser set-up parameters:

| | |
|---|---|
| Pulse On-Time | 25µs |
| Maximum Pulse Power | 100% |
| Minimum Pulse Power | 80% |
| Laser-Membrane Dist. | 5mm |
| Cutting Speed | 1000mm/s |

The membrane was successfully cut and bonded.

### Example 3

A further test using the method of example 1 was carried out on Flemion SH80™ material using the following laser set-up parameters:

| | |
|---|---|
| Pulse On-Time | 25µs |
| Maximum Pulse Power | 10% |
| Minimum Pulse Power | 10% |
| Laser-Membrane Dist. | 25mm |
| Cutting Speed | 35mm/s |

The membrane was successfully cut and bonded.

### Example 4

Laser cutting and joining of membranes to a polyethylene substrate was carried out on the following membrane materials:
Fluorinated ethylene-propylene copolymer (FEP) film (100µm thick, 100mm wide)
Nafion 115™(120µm thick, 100mm wide)

The laser used was a Synrad sealed, continuous wave CO₂ laser. The trials were performed on a 100mm test piece on a polyethylene board through a galvanometer beam delivery system. The laser used was a 50W unit with one rod disconnected, thus effectively operating as a standard 25W unit. The actual beam power was measured using a calibrated laser intensity meter (the maximum laser power was found to be 30W). The results of the cutting trials are given below:

| Actual Beam Power (Watts) | Cutting Speed (mm/s) | Membrane Material | Comments |
|---|---|---|---|
| 30 | 20 | FEP | Cut |
| | | | Weak bond |
| 18 | 20 | FEP | Cut |
| | | | Good bond |
| 18 | 20 | Nafion™ | Cut |
| | | | Very good bond |

### Example 5

Laser cutting and joining of a rectangular portion of membrane with four curved corners was carried out using a pulsed laser with the following materials and laser parameters:
Membrane = Nafion™ 115 and FEP
Frame material = high density polyethylene
Laser power = 60W for straight edges
   4W for corners
Cutting speed = 100mm/s for straight edges
   40mm/s for corners.

## Claims

1. A method for cutting a fluorinated polymer membrane and simultaneously joining it to a polyolefin polymer frame, the method comprising the steps
of;
(i) contacting a fluorinated polymer membrane with a polyolefin polymer frame at the point where a cut and join is desired, and
(ii) directing at least one laser beam onto the point of contact between the membrane and the frame so as to cut the membrane and effect a join to the frame.

2. A method according to claim 1 wherein the fluorinated polymer membrane is made from a fluorinated polymer selected from polytetrafluoroethylene, polyhexafluoropropylene, tetrafluoroethylene-hexafluoropropylene copolymer, tetrafluoroethylene-propylene copolymer, tetrafluoroethylene-ethylene copolymer, hexafluoropropylene-propylene copolymer, hexafluoropropylene-ethylene copolymer, polyvinylidene fluoride, vinylidene fluoride tetrafluoroethylene copolymer, vinylidene fluoride hexafluoropropylene copolymer, polyvinyl fluoride, tetrafluoroethylene-perfluoroalkyl vinyl ether copolymer, polyvinylidene-hexafluoropropylene copolymer, chlorotrifluoroethylene-ethylene copolymer, chlorotrifluoroethylene-propylene copolymer, or perfluoroalkoxy copolymer.

3. A method according to claim 1 wherein the fluorinated polymer membrane is a fluorinated polymer ion exchange membrane.

4. A method according to claim 3 wherein the fluorinated polymer ion exchange membrane is made from a fluorinated polymer selected from polytetrafluoroethylene, polyhexafluoropropylene, tetrafluoroethylene-hexafluoropropylene copolymer, tetrafluoroethylene-propylene copolymer, tetrafluoroethylene-ethylene copolymer, hexafluoropropylene-propylene copolymer, hexafluoropropylene-ethylene copolymer, polyvinylidene fluoride, vinylidene fluoride tetrafluoroethylene copolymer, vinylidene fluoride hexafluoropropylene copolymer, polyvinyl fluoride, tetrafluoroethylene-perfluoroalkyl vinyl ether copolymer, polyvinylidene-hexafluoropropylene copolymer, chlorotrifluoroethylene-ethylene copolymer, chlorotrifluoroethylene-propylene copolymer, or perfluoroalkoxy copolymer with suitably functionalised monomer units grafted thereon.

5. A method according to claim 3 or claim 4 wherein the fluorinated polymer ion-exchange membrane is a fluorinated polymer cation-exchange membrane.

6. A method according to claim 5 wherein the fluorinated polymer cation-exchange membrane is a hydrolysed copolymer of tetrafluoroethylene and a perfluoro-vinyl ether monomer comprising a cation-exchange group.

7. A method according to any one of claims 3 to 6 wherein the fluorinated polymer ion-exchange membrane is de-functionalised in the vicinity of the cut edge so as to reduce the wicking of fluid through the cut edge.

8. A method according to any one of the preceding claims wherein the thickness of the membrane is in the range of from 25µm to 300µm.

9. A method according to any one of the preceding claims wherein the frame is made from a polyolefin polymer selected from polyethylene, polypropylene, polystyrene or a copolymer blend of two or more of polyethylene, polypropylene and polystyrene.

10. A method according to any one of the preceding claims wherein the laser beam is either pulsed or continuous.

11. A method according to any one of the preceding claims wherein the power of the laser beam is in the range of from 10 to 150W.

12. A method according to any one of the preceding claims wherein the speed of travel of the laser beam along the cutting and joining line is in the range of from 10mm/s to 1000mm/s.

13. A method according to any one of the preceding claims wherein the width of the beam at the point where it impinges on the membrane is in the range of from 50µm to 450µm.

14. A method according to any one of the preceding claims wherein the laser used is a pulsed CO₂ laser.

15. A method according to any one of the preceding claims wherein there is provided shielding means which is situated adjacent to the point of contact of the laser beam with the membrane and which moves in synchrony with the laser beam as it travels along the cutting line.

16. A method according to any one of the preceding claims wherein the contact between the fluorinated polymer membrane and the hydrocarbon polymer frame is achieved by pressure means which urges the membrane into contact with the frame.

17. A method according to claim 16 wherein the pressure means comprises a plate of substantially the same perimeter size and shape as the membrane which can be pressed against the membrane to ensure contact between the membrane and frame at the point of cutting.

18. A method according to claim 16 wherein the pressure means comprises a roller which impinges on the membrane at a position adjacent to the laser beam.

19. A method according to claim 16 wherein the pressure means comprises one or more gas jets which apply positive air pressure on the membrane at a position adjacent to the laser beam.

20. A method according to claim 19 wherein the laser beam and gas jet are directed at an angle of from 110 to 120 degrees to the plane of the membrane, pointing in a direction away from the centre of the membrane.

21. A method according to claim 16 wherein the pressure means comprises means for providing a vacuum between the membrane and the frame at or adjacent to the point where the laser beam impinges on the membrane.

22. A method according to any one of claims 16 and 18 to 21 which additionally utilises a plate of substantially the same size and shape as the membrane which impinges thereon and acts as a shield to prevent debris from the cutting procedure from contaminating the main central portion of the membrane.

23. A method according to any one of the preceding claims wherein the laser beam is in the form of a single beam, dual beams or concentric multiple beams.

24. A method according to any one of the preceding claims wherein the membrane comprises an electrode attached thereto.

25. Apparatus for cutting a fluorinated polymer membrane and simultaneously joining it to a polyolefin polymer frame, the apparatus comprising:
(i) a beam delivery system which comprises means for generating and directing one or more laser beams onto the membrane at an angle of from 110 to 120 degrees to the plane of the membrane pointing in a direction away from the centre of the membrane and means for generating and directing positive air pressure to a point at or adjacent to the point where said one or more laser beams impinge on the membrane,
(ii) a cowl which encompasses the laser beam delivery area, and
(iii)a pump for conveying fumes away from the point of cutting and joining;
wherein the means for generating and directing one or more laser beams and the means for generating and directing positive gas pressure are constructed so as to provide a laser beam and a gas jet which are substantially parallel to one another.

26. A sub-assembly comprising a polyolefin polymer frame and a fluorinated polymer membrane which has been cut and joined thereto by the method claimed in any one of claims 1 to 24.

27. An electrochemical apparatus formed from a plurality of sub-assemblies as claimed in claim 26.

## Patentansprüche

1. Verfahren zum Schneiden einer fluorierten Polymermembran und zu deren gleichzeitigem Binden an einen Polyolefinpolymer-Rahmen, wobei das Verfahren die Schritte umfasst,
(i) in Berührung bringen einer fluorierten Polymermembran mit einem Polyolefinpolymer-Rahmen an dem Punkts an dem ein Schnitt und eine Bindung erwünscht ist, und
(ii) richten zumindest eineS Laserstrahls auf den Berührungspunkt zwischen der Membran und dem Rahmen, so dass die Membran geschnitten und eine Bindung an den Rahmen bewirkt wird.

2. Verfahren nach Anspruch 1, wobei die fluorierte Polymermembran aus einem fluorierten Polymer hergestellt ist, das aus Polytetrafluorethylen, Polyhexafluorpropylen, Tetrafluorethylen-Hexafluorpropylen-Copolymer, Tetrafluorethylen-Propylen-Copolymer, Tetrafluorethylen-Ethylen-Copolymer, Hexafluorpropylen-Propylen-Copolymer, Hexafluorpropylen-Ethylen-Copolymer, Polyvinylidenfluorid, Vinylidenfluoridtetrafluorethylen-Copolymer, Vinylidenfluoridhexafluorpropylen-Copolymer, Polyvinylfluorid, Tetrafluorethylenperfluoralkylvinylether-Copolymer, Polyvinyliden-Hexafluorpropylen-Copolymer, Chlortrifluorethylen-Ethylen-Copolymer, Chlortrifluorethylen-Propylen-Copolymer oder Perfluoralkoxy-Copolymer ausgewählt ist.

3. Verfahren nach Anspruch 1, wobei die fluorierte Polymermembran eine fluorierte Polymer-Ionenaustauschmembran ist.

4. Verfahren nach Anspruch 3, wobei die fluorierte Polymer-Ionenaustauschmembran aus einem fluorierten Polymer hergestellt ist, das aus Polytetrafluorethylen, Polyhexafluorpropylen, Tetrafluorethylen-Hexafluorpropylen-Copolymer. Tetrafluorethylen-Propylen-Copolymer, Tetrafluorethylen-Ethylen-Copolymer, Hexafluorpropylen-Propylen-Copolymer, Hexafluorpropylen-Ethylen-Copolymer, Polyvinylidenfluorid, Vinylidenfluoridtetrafluorethylen-Copolymer, Vinylidenfluoridhexafluorpropylen-Copolymer, Polyvinylfluorid, Tetrafluorethylenperfluoralkylvinylether-Copolymer, Polyvinyliden-Hexafluorpropylen-Copolymer, Chlortrifluorethylen-Ethylen-Copolymer, Chlortrifluorethylen-Propylen-Copolymer oder Perfluoralkoxy-Copolymer ausgewählt ist, wobei in geeigneter Weise funktionalisierte Monomereinheiten darauf aufgepropft sind.

5. Verfahren nach Anspruch 3 oder 4, wobei die fluorierte Polymer-Ionenaustauschmembran eine fluorierte Polymer-Kationenaustauschmembran ist.

6. Verfahren nach Anspruch 5, wobei die fluorierte Polymer-Kationenaustauschmembran ein hydrolysiertes Copolymer aus Tetrafluorethylen und einem Perfluorvinylether-Monomer ist, das eine Kationenaustauschgruppe umfasst.

7. Verfahren nach einem der Ansprüche 3 bis 6, wobei die fluorierte Polymer-Ionenaustauschmembran in der Umgebung der Schnittkante defunktionalisiert ist, so dass die Dochtwirkung der Schnittkante für Flüssigkeit reduziert wird.

8. Verfahren nach einem der vorhergehenden Ansprüche, wobei die Dicke der Membran im Bereich von 25 µm bis 300 µm liegt.

9. Verfahren nach einem der vorhergehenden Ansprüche, wobei der Rahmen aus einem Polyolefinpolymer hergestellt ist, das aus Polyethylen, Polypropylen, Polystyrol oder einem Copolymergemisch aus zwei oder mehreren von Polyethylen, Polypropylen und Polystyrol ausgewählt ist.

10. Verfahren nach einem der vorhergehenden Ansprüche, wobei der Laserstrahl entweder gepulst oder kontinuierlich ist.

11. Verfahren nach einem der vorhergehenden Ansprüche, wobei die Leistung des Laserstrahls im Bereich von 10 bis 150 W liegt.

12. Verfahren nach einem der vorhergehenden Ansprüche, wobei die Wandergeschwindigkeit des Laserstrahls entlang der Schnitt- und Bindungslinie im Bereich von 10 mm/s bis 1.000 mm/s liegt.

13. Verfahren nach einem der vorhergehenden Ansprüche, wobei die Breite des Strahls an dem Punkt, an dem er auf die Membran auftrifft, im Bereich von 50 µm bis 450 µm liegt.

14. Verfahren nach einem der vorhergehenden Ansprüche, wobei der verwendete Laser ein gepulster CO₂ Laser ist.

15. Verfahren nach einem der vorhergehenden Ansprüche, wobei eine Schutzvorrichtung vorgesehen ist, die sich zum Berührungspunkt des Laserstrahles mit der Membran benachbart befindet und die sich synchron mit dem Laserstrahl bewegt, wenn er sich entlang der Schnittlinie bewegt.

16. Verfahren nach einem der vorhergehenden Ansprüche, wobei die Berührung zwischen der fluorierten Polymermembran und dem Kohlenwasserstoffpolymerrahmen durch Andruckmittel erreicht wird, die die Membran mit dem Rahmen in Berührung bringen.

17. Verfahren nach Anspruch 16, wobei das Andruckmittel eine Platte umfasst, die von im wesentlichen gleiche Umfangsgröße und Form wie die Membran hat, und die gegen die Membran gepresst werden kann, um eine Berührung zwischen der Membran und dem Rahmen am Schnittpunkt sicherzustellen.

18. Verfahren nach Anspruch 16, wobei das Druckmittel eine Walze umfasst, die in einer zum Laserstrahl benachbarten Position auf die Membran auftrifft.

19. Verfahren nach Anspruch 16, wobei das Druckmittel ein oder mehrere Gasstrahlen umfasst, die einen positiven Luftdruck auf die Membran an einer zum Laserstrahl benachbarten Position ausüben.

20. Verfahren nach Anspruch 19, wobei der Laserstrahl und der Gasstrahl in einem Winkel von 110 bis 120 Grad zur Ebene der Membran, in eine Richtung weg vom Zentrum der Membran weisend, gerichtet sind.

21. Verfahren nach Anspruch 16, wobei das Andruckmittel Mittel zur Bereitstellung eines Vakuums zwischen der Membran und dem Rahmen an oder benachbart dem Punkt umfasst, an dem der Laserstrahl auf die Membran auftrifft.

22. Verfahren nach einem der Ansprüche 16 und 18 bis 21, das zusätzlich eine Platte verwendet von im wesentlichen derselben Größe und Form wie die Membran, und die darauf auftrifft und als Schutz dient, um Bruchstücke vom Schneidvorgang daran zu hindern, den zentralen Hauptabschnitt der Membran zu kontaminieren.

23. Verfahren nach einem der vorhergehenden Ansprüche, bei dem der Laserstrahl in Form eines einzelnen Strahls, eines Doppelstrahls oder vielfacher konzentrischer Strahlen vorliegt.

24. Verfahren nach einem der vorhergehenden Ansprüche, wobei an der Membran eine Elektrode befestigt ist.

25. Vorrichtung zum Schneiden einer fluorierten Polymermembran und zum gleichzeitigen Binden derselben an einen Polyolefinpolymerrahmen, wobei die Vorrichtung Folgendes umfasst:
(i) ein Strahlabgabesystem, das ein Mittel zur Erzeugung und Führung von ein oder mehreren Laserstrahlen auf die Membran in einem Winkel von 110 bis 120 Grad gegenüber der Ebene der Membran, in eine Richtung weg vom Zentrum der Membran weisend, und Mittel zur Erzeugung und Führung eines positiven Luftdruckes auf einen Punkt an oder benachbart dem Punkt umfasst, an dem der eine oder mehrere Laserstrahlen auf die Membran auftreffen,
(ii) eine Schutzkappe, die den Laserstrahlabgabebereich umfasst und
(iii) eine Pumpe zum Wegbefördern von Rauch vom Schneid- und Bindungspunkt;
wobei die Mittel zur Erzeugung und Führung des einen oder mehrerer Laserstrahlen und die Mittel zur Erzeugung und Führung eines positiven Gasdruckes so konstruiert sind, dass sie einen Laserstrahl und einen Gasstrahl bereitstellen, die zueinander im wesentlichen parallel sind.

26. Baugruppe, mit einem Polyolefinpolymerrahmen und eine fluorierte Polymermembran, die nach dem in einem der Ansprüche 1 bis 24 beanspruchten Verfahren geschnitten und verbunden wurden.

27. Elektrochemische Vorrichtung, die aus einer Vielzahl von Baugruppen nach Anspruch 26 gebildet ist.

## Revendications

1. Procédé pour découper une membrane en polymère fluoré et, simultanément, à la joindre à un cadre en polymère polyoléfinique, procédé comprenant les étapes consistant :
i) à mettre en contact une membrane en polymère fluoré avec un cadre en polymère polyoléfinique au point où une découpe et une jonction sont désirées, et
ii) à diriger au moins un faisceau laser sur le point de contact entre la membrane et le cadre de manière à découper la membrane et effectuer une jonction au cadre.

2. Procédé suivant la revendication 1, dans lequel la membrane en polymère fluoré est constituée d'un polymère fluoré choisi entre le polytétrafluoréthylène, le polyhexafluoropropylène, un copolymère tétrafluoréthylène-hexafluoropropylène, un copolymère tétrafluoréthylène-propylène, un copolymère tétrafluoréthylène-éthylène, un copolymère hexafluoropropylène-propylène, un copolymère hexafluoropropylène-éthylène, un poly(fluorure de vinylidène), un copolymère fluorure de vinylidène-tétrafluoréthylène, un copolymère fluorure de vinylidène-hexafluorcpropylène, un poly(fluorure de vinyle), un copolymère tétrafluoréthylène-perfluoralkyl vinyléther, un copolymère polyvinylidène-hexafluoropropylène, un copolymère chlorotrifluoréthylène-éthylène, un copolymère chlorotrifluoréthylène-propylène, et un perfluoroalkoxy-copolymère.

3. Procédé suivant la revendication 1, dans lequel la membrane en polymère fluoré est une membrane échangeuse d'ions, constituée d'un polymère fluoré.

4. Procédé suivant la revendication 3, dans lequel la membrane échangeuse d'ions constituée d'un polymère fluoré est produite à partir d'un polymère fluoré choisi entre le polytétrafluoréthylène, le polyhexafluoropropylène, un copolymère tétrafluoréthylène-hexafluoropropylène, un copolymère tétrafluoréthylène-propylène, un copolymère tétrafluoréthylène-éthylène, un copolymère hexafluoropropylène-propylène, un copolymère hexafluoropropylène-éthylène, un poly(fluorure de vinylidène), un copolymère fluorure de vinylidène-tétrafluoréthylène, un copolymère fluorure de vinylidène-hexafluoropropylène, un poly(fluorure de vinyle)è, un copolymère tétrafluoréthylène-perfluoralkyl vinyléther, un copolymère polyvinylidène-hexafluoropropylène, un copolymère chlorotrifluoréthylène-éthylène, un copolymère chlorotrifluoréthylène-propylène et un perfluoroalkoxy-copolymère sur lequel sont greffés des motifs monomères fonctionnalisés convenablement.

5. Procédé suivant la revendication 3 ou la revendication 4, dans lequel la membrane échangeuse d'ions formée d'un polymère fluoré est une membrane échangeuse de cations formée d'un polymère fluoré.

6. Procédé suivant la revendication 5, dans lequel la membrane échangeuse de cations formée d'un polymère fluoré est constituée d'un copolymère hydrolysé de tétrafluoréthylène et d'un monomère éther perfluorovinylique comprenant un groupe échangeur de cations.

7. Procédé suivant l'une quelconque des revendications 3 à 6, dans lequel la membrane échangeuse d'ions formée d'un polymère fluoré est défonctionnalisée à proximité du bord de coupe de manière à réduire l'effet d'entraînement de fluide à travers le bord de coupe.

8. Procédé suivant l'une quelconque des revendications précédentes, dans lequel l'épaisseur de la membrane est comprise dans l'intervalle de 25 µm à 300 µm.

9. Procédé suivant l'une quelconque des revendications précédentes, dans lequel le cadre est constitué d'un polymère polyoléfinique choisi entre le polyéthylène, le polypropylène, le polystyrène et un mélange copolymère constitué de deux ou plus de deux des polymères consistant en polyéthylène, polypropylène et polystyrène.

10. Procédé suivant l'une quelconque des revendications précédentes, dans lequel le faisceau laser est pulsé ou continu.

11. Procédé suivant l'une quelconque des revendications précédentes, dans lequel la puissance du faisceau laser est comprise dans l'intervalle de 10 à 150 W.

12. Procédé suivant l'une quelconque des revendications précédentes, dans lequel la vitesse de parcours du faisceau laser le long de la ligne de coupe et de jonction est comprise dans l'intervalle de 10 mm/s à 1000 mm/s.

13. Procédé suivant l'une quelconque des revendications précédentes, dans lequel la largeur du faisceau au point où il frappe la surface de la membrane est comprise dans l'intervalle de 50 µm à 450 µm.

14. Procédé suivant l'une quelconque des revendications précédentes, dans lequel le laser utilisé est un laser à CO₂ pulsé.

15. Procédé suivant l'une quelconque des revendications précédentes, dans lequel est présent un moyen de protection qui est situé en position adjacente au point de contact du faisceau laser avec la membrane et qui se déplace en synchronisme avec le faisceau laser lors de son parcours le long de la ligne de coupe.

16. Procédé suivant l'une quelconque des revendications précédentes, dans lequel le contact entre la membrane en polymère fluoré et le cadre en polymère hydrocarboné est réalisé par un moyen d'application de pression qui pousse la membrane en contact avec le cadre.

17. Procédé suivant la revendication 16, dans lequel le moyen d'application de pression comprend une plaque ayant un périmètre et une forme pratiquement identiques à ceux de la membrane, qui peut être pressée contre la membrane pour garantir le contact entre la membrane et le cadre au point de coupe.

18. Procédé suivant la revendication 16, dans lequel le moyen d'application de pression comprend un rouleau qui appuie sur la membrane à une position adjacente au faisceau laser.

19. Procédé suivant la revendication 16, dans lequel le moyen d'application de pression comprend un ou plusieurs jets de gaz qui appliquent une pression d'air positif sur la membrane à une position adjacente au faisceau laser.

20. Procédé suivant la revendication 19, dans lequel le faisceau laser et le jet de gaz sont dirigés à un angle de 110 à 120° par rapport au plan de la membrane, en se dirigeant dans une direction éloignée du centre de la membrane.

21. Procédé suivant la revendication 16, dans lequel le moyen d'application de pression comprend un moyen pour engendrer un vide entre la membrane et le cadre au niveau ou en position adjacente du point où le faisceau laser frappe la membrane.

22. Procédé suivant l'une quelconque des revendications 16 et 18 à 21, qui utilise en outre une plaque ayant des dimensions et une forme pratiquement identiques à celles de la membrane qui appuie sur cette membrane et qui joue le rôle d'écran pour empêcher des débris provenant du mode opératoire de coupe de contaminer la partie centrale principale de la membrane.

23. Procédé suivant l'une quelconque des revendications précédentes, dans lequel le faisceau laser est sous forme d'un faisceau unique, de faisceaux doubles ou de faisceaux multiples concentriques.

24. Procédé suivant l'une quelconque des revendications précédentes, dans lequel la membrane comprend une électrode fixée à celle-ci.

25. Appareil pour couper une membrane en polymère fluoré, et simultanément, la joindre à un cadre en polymère polyoléfinique, appareil comprenant :
i) un système de distribution de faisceaux qui comprend un moyen pour engendrer et diriger un ou plusieurs faisceaux laser sur la membrane à un angle de 110 à 120° par rapport au plan de la membrane se dirigeant dans une direction éloignée du centre de la membrane et un moyen pour engendrer et diriger une pression d'air positive à un point au niveau du ou adjacent au point où ledit ou lesdits faisceaux laser frappe la membrane,
ii) un capot qui entoure la zone de distribution de faisceaux laser,
iii) une pompe pour entraîner les fumées hors du point de coupe et de jonction ;
dans lequel le moyen pour engendrer et diriger un ou plusieurs faisceaux laser et le moyen pour engendrer et diriger une pression de gaz positive sont construits de manière à fournir un faisceau laser et un jet de gaz qui sont pratiquement parallèles l'un à l'autre.

26. Sous-assemblage comprenant un cadre en polymère polyoléfinique et une membrane en polymère fluoré qui a été coupée et jointe à ce cadre par le procédé suivant l'une quelconque des revendications 1 à 24.

27. Appareil électrochimique formé d'une pluralité de sous-assemblages suivant la revendication 26.
